# EUROPEAN PATENT SPECIFICATION

(11) **EP 2 353 753 B1**
(45) Date of publication and mention of the grant of the patent: **17.04.2013**
(21) Application number: 10195906.2
(22) Date of filing: 20.12.2010
(51) Int. Cl.: B22F 3/00, F01D 5/14, F04D 29/68, F15D 1/12

(54) **Method of forming a pattern on a turbomachine component**
Verfahren zur Bildung eines Musters auf einer Turbomaschinenkomponente
Procédé de formation d'un motif sur un composant de turbomachine

(30) Priority: 04.01.2010 US 651817
(43) Date of publication of application: 10.08.2011
(73) Proprietor: GENERAL ELECTRIC COMPANY, Schenectady, NY 12345 (US)
(72) Inventor: Hardwicke, Canan Uslu, Greenville, SC 29615 (US)
(74) Representative: Cleary, Fidelma

(56) References cited:
- EP-A1- 1 645 655
- EP-A2- 1 952 932
- US-A1- 2004 115 351
- US-B1- 6 203 021

## Description

The subject matter disclosed herein relates to the art of turbomachines and, more particularly, to a patterned turbomachine component and a method of forming a pattern on a turbomachine component.

Turbomachine components, such as compressor blades, rotate to generate a high pressure air flow. The high pressure air flow combines with a combustion air flow to rotate turbine blades. Changes in aerodynamic properties of either the compressor blades and/or the turbine blades result in changes to overall operational characteristics of the turbomachine. It has been found that increasing a surface area of compressor and/or turbine blades leads to enhanced turbomachine operation.

Conventional methods of increasing surface area of compressor and/or turbine blades include molding processes and etching or machining, i.e., surface removal, processes. In the molding process, patterns are formed on a mold. When cast, the patterns are formed on a surface of the compressor and/or turbine blades. The patterns are configured and disposed to increase an effective surface area and enhance aerodynamic properties of the compressor and/or turbine blades. In the etching process, chemicals, lasers or other methods are employed to remove specific portions from the surface of the compressor and/or turbine blades. As noted above, the patterns are configured and disposed to increase an effective surface area and enhance aerodynamic properties of the compressor and/or turbine blades.

United States Patent Application No. 2004/0115351 shows the features of the preamble of claims 1 and 8 respectively and describes a method of producing a profiled abradable coating on a substrate in which an abradable ceramic coating composition is applied to a substrate using direct-write technology, or plasma sprayed onto the substrate through a mask or by use of a narrow foot-print plasma gun. These methods of producing abradable coatings are performed in the absence of a grid.

European Patent Application No. 1952932 describes a method is disclosed for laser cladding a substrate comprising depositing a first determined variable bead width of a material along a toolpath upon the substrate; depositing a second adjacent determined variable bead width of a material along the toolpath which overlaps the first determined variable bead width of deposited material; continuing to deposit a plurality of overlapping predetermined adjacent variable bead widths of a material until a first material layer is complete; forming a second material layer by depositing a plurality of overlapping predetermined variable bead widths of a material on top of the first material layer; and continuing to deposit material layers on top of deposited material layers until the cladding is complete; wherein the variable bead width of the deposited material is controlled by a computer having a plurality of input parameters to maintain an approximately constant percent of bead width overlap.

United States Patent No. 6203021 describes an abradable seal is provided utilizing a laser to cut a pattern into the surface effective to improve abradability in the area of the pattern.

European Patent Application No. 1645655 describes a gas turbine engine compressor blade having a thermal barrier coating incorporating a network of thermal expansion seams. The seam pattern is e.g. rectangular, hexagonal. The thermal barrier coating is a porous ceramic material applied using a bonding agent to a metal substrate. The metal substrate is applied to the blade root zone by a thermal spray or a gas separation phase under a wire screen.

According to one aspect of the invention, a method of forming a pattern on a turbomachine component is defined in claim 1.

According to another aspect of the invention, a turbomachine component includes a body portion having an external surface as defined in claim 8.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a partial, cross-sectional view of a turbomachine including a patterned turbomachine component in accordance with an exemplary embodiment;
FIG 2 is a perspective view of the patterned turbomachine component of FIG. 1;
FIG 3 is a partial side view of the patterned turbomachine component of FIG. 2 illustrating material added to a surface of the turbomachine component to form a pattern;
FIG. 4 is a flow chart illustrating a method of forming a pattern on a turbomachine component in accordance with an exemplary embodiment; and
FIG. 5 is a plan view of another patterned turbomachine component in accordance with an exemplary embodiment.

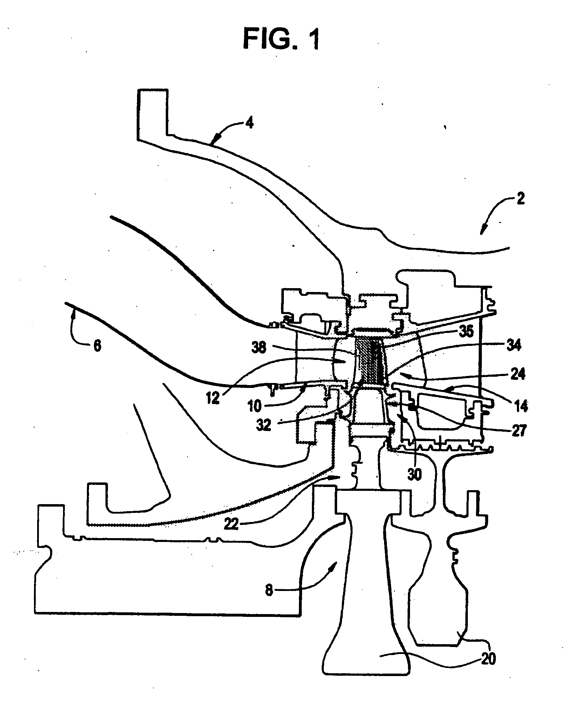

Referring to FIG. 1, a turbomachine constructed in accordance with an exemplary embodiment is indicated generally at 2. Turbomachine 2 includes a turbine casing 4 that houses a combustion chamber 6 and a turbine stage 8. In the exemplary embodiment shown, turbine stage 8 is a first stage. Combustion gases from combustion chamber 6 pass through a first stage nozzle 10 along a hot gas path (HGP) 12 to a second stage nozzle 14. The combustion gases drive a rotor disk 20 that, in turn, drives a turbine shaft (not shown). Rotor disk 20 is arranged in a wheel space area 22 of turbomachine 2 and includes a plurality of turbine buckets, one of which is indicated at 24, mounted to rotor disk 20. Each turbine bucket 24 includes a body portion 27 that defines a base portion 30, and an airfoil portion 32. Airfoil portion 32 includes a first end section 34 that extends to a second end section 35 through an airfoil surface 38. The combustion gases passing along hot gas path 12 impact airfoil surface 38 pushing airfoil portion 32 circumferentially causing rotor disk 20 to rotate.

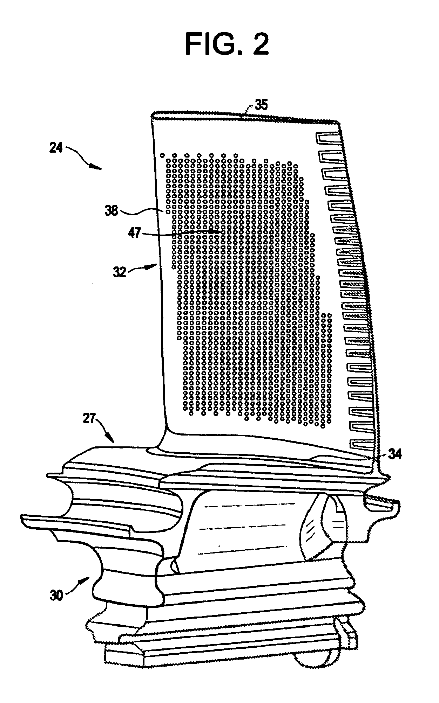

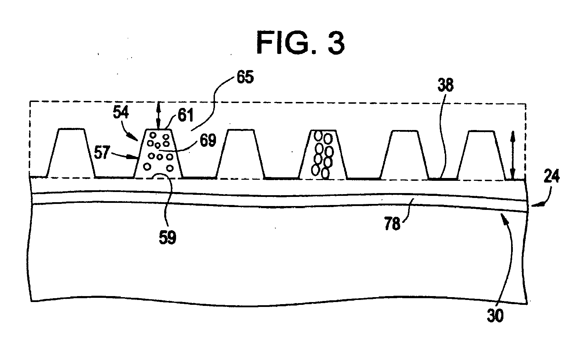

With reference to FIGS 2 and 3, in accordance an exemplary embodiment, airfoil surface 38 includes a patterned zone 47 having a plurality of raised elements, one of which is indicated at 54 that enhance aerodynamic performance for turbine bucket 24. Each raised element 54 includes a body portion 57 having a base portion 59 that extends to a tip portion 61. Each raised element 54 has a generally trapezoidal form with base portion 59 being larger than tip portion 61. In accordance with one aspect of the exemplary embodiment, a coating is applied to patterned zone 47. Coating 65 provides additional protection for each raised element 54. In the exemplary embodiment shown, coating 65 is applied in a substantially linear layer. However, it should be understood that coating 65 could also be contoured. In accordance with another aspect of the exemplary embodiment, a plurality of pores 69 are created in body portion 57. Pores 69 further enhance the surface area of raised elements 54.

In further accordance with the exemplary embodiment, patterned zone 47 is formed using a direct write (DW) process. The direct write process adds material to airfoil surface 38 in a predetermined pattern. In accordance with one aspect of the exemplary embodiment, raised elements 54 are formed from at least one of a polymer, a ceramic, a metal, and a composite. Of course other materials and composites may also be employed. As will be discussed more fully below, depending upon the material employed for raised elements 54, prior to adding patterned zone 47, a bond coat 78 is applied to airfoil surface 38. Bond coat 78 enhances adhesion of the plurality of raised features 54 that are added using the DW process.

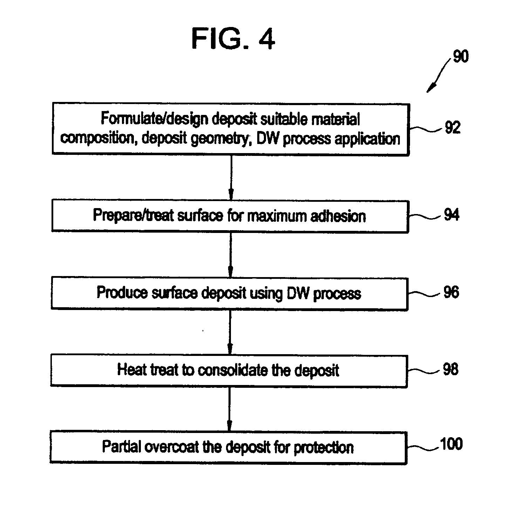

Reference will now be made to FIG. 4 in describing a method 90 of creating patterned zone 47. Initially, a pattern design and material type is formulated for the DW process as indicated in block 92. That is, prior to creating patterned zone 47, the particular type of pattern and the particular material employed to form the pattern is formulated and input into a DW process application. In accordance with one aspect, the particular material(s) chosen will result in raised elements 54 including pores 69. At this point, if required, bond coat 78 is added to airfoil surface 38 as indicated in block 94. After applying bond coat 78 and/or grit blasting or chemical etching is applied to improve surface roughness to enhance adhesion, surface deposits are added to airfoil surface 38 as indicated in block 96. After adding the surface deposits to form the plurality of raised features 54, airfoil surface 38 is heat-treated to consolidate or harden raised features 54 as indicated in block 98. Of course, it should be understood that the need for heat-treatment is dependent upon the particular type of material used in forming the plurality of raised features.

After heat-treating, a partial overcoat is applied to the plurality of raised features 54 as indicated in block 100. The overcoat or coating is used to provide additional protection to the plurality raised features as indicated above. Of course the need for an overcoat or coating is also dependent on a particular type of material used in forming patterned zone 47. In addition to adding features, material may be removed to form additional patterns in airfoil surface 48. The material is removed using one or more known techniques such as etching, lasers and the like.

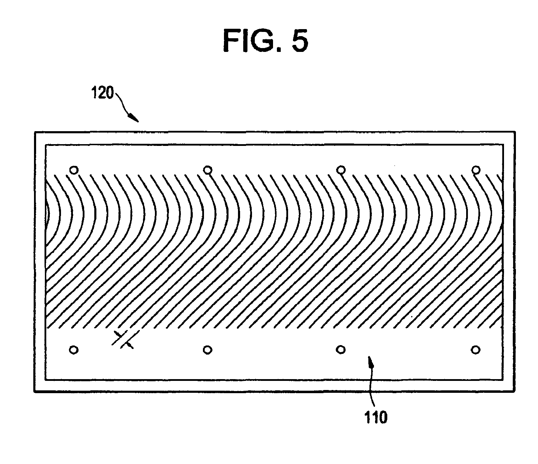

At this point, it should be understood that the exemplary embodiments employs a direct write (DW) process to add material to surface portions of a turbomachine component to form a patterned zone. Of course, once added, portions of the material can be selectively removed to alter/adjust the patterned zone. If desired, the material is selectively removed using a solvent to dissolve portions of the patterned zone, or using a laser to remove/alter portions of the patterned zone. In addition to providing patterns on three-dimensional (3D) surfaces such as turbine buckets described above, exemplary embodiments can be employed to create a patterned zone 110 on two-dimensional (2D) surfaces such as a shroud 120 shown in FIG. 5. Regardless of the surface, the additional material enhances the structural stability of the turbomachine component. That is, instead of the conventional process for creating patterns on existing turbomachine components which requires removing material, the exemplary embodiments add material to the turbomachine component to enhance aerodynamic properties.

While the invention has been described in detail in connection with only a limited number of embodiments, it should be readily understood that the invention is not limited to such disclosed embodiments.

## Claims

1. A method of forming patterns on a turbomachine component (24), the method comprising:
adding material to selected surface regions (38) of the turbomachine component (24) using a direct write (DW) process, the material being arranged in a predetermined pattern to form at least one patterned zone (47) having a plurality of raised elements (54), each raised element (54) including a body portion (57) having a base portion (59) that extends to a tip portion (61) **characterized in** the body portion (57) having a plurality of pores (69) formed on the surface thereof, wherein each raised element (54) has a generally trapezoidal form with the base portion (59) being larger than the tip portion (61).

2. The method of claim 1, further comprising: creating a computer drawing file that defines the predetermined pattern to be added to the selected surface regions (38) of the turbomachine component (24).

3. The method of claim 2, further comprising: transferring the pattern directly to the turbomachine component.

4. The method of any preceding claim, further comprising: adding material with at least one of a nozzle dispensing process, thermal spray process, a soft lithography process, and a laser process.

5. The method of any preceding claim, further comprising: removing a portion of the material added to the selected surface regions (38).

6. The method of claim 5, wherein removing the portion of the material includes dissolving, with a laser, predetermined portions of the material.

7. The method according to any preceding claim, wherein the material is added to select surface regions (38) of one of a compressor blade and a turbine blade (24).

8. A turbomachine component comprising:
a body portion (32) including an external surface (38); and
at least one patterned zone (47) formed on the external surface (38), the patterned zone (47) including material added to select portions of the external surface (38) through a direct write (DW) process, and comprising a plurality of raised elements (54), each raised element (54) including a body portion (57) having a base portion (59) that extends to a tip portion (61) **characterized in**, the body portion (57) having a plurality of pores (69) formed on the surface thereof, wherein each raised element (54) has a generally trapezoidal form, with the base portion (59) being larger than the tip portion (61).

9. The turbomachine according to claim 8, further comprising:
removing a portion of the material added to the select portions of the external surface.

10. The turbomachine according to claim 8 or 9, wherein the turbomachine component (32) includes a three-dimensional (3D) surface.

11. The turbomachine according to claims 8, 9 or 10, wherein the turbomachine component is one of a compressor blade and a turbine blade.

12. The turbomachine according to any of claims 8 to 11, wherein the turbomachine component includes a two-dimensional (2D) surface.

13. The turbomachine according to any of claims 8 to 12, wherein the turbomachine component is a shroud.

## Patentansprüche

1. Verfahren zum Ausbilden von Mustern auf einer Turbomaschinenkomponente (24), wobei das Verfahren die Schritte aufweist:
Aufbringen von Material auf ausgewählte Oberflächenbereiche (38) der Turbomaschinenkomponente (24) unter Anwendung eines Direktschreib-(DW)-Prozesses, wobei das Material in einem vorbestimmten Muster angeordnet wird, um wenigstens eine strukturierte Zone (47) mit mehreren erhöhten Elementen (54) auszubilden, wobei jedes erhöhte Element (54) einen Körperabschnitt (57) mit einem Basisabschnitt (59) enthält, der sich zu einem Spitzenabschnitt (61) erstreckt, **dadurch gekennzeichnet, dass** der Körperabschnitt (57) mehrere auf seiner Oberfläche ausgebildete Poren (69) hat, wobei jedes erhöhte Element (54) eine im Wesentlichen trapezartige Form hat, bei dem der Basisabschnitt (59) größer als der Spitzenabschnitt (61) ist.

2. Verfahren nach Anspruch 1, ferner mit dem Schritt:
Erzeugen einer Computerzeichnungsdatei, die das auf die ausgewählten Oberflächenbereiche (38) der Turbomaschinenkomponente (24) aufzubringende vorbestimmte Muster definiert.

3. Verfahren nach Anspruch 2, ferner mit dem Schritt:
Direktes Übertragen des Musters auf die Turbomaschinenkomponente.

4. Verfahren nach einem der vorstehenden Ansprüche, ferner mit dem Schritt:
Aufbringen von Material mit wenigstens einem von einem Düsenausgabeprozess, thermischem Spritzprozess, Weichlithographieprozess und einem Laserprozess.

5. Verfahren nach einem der vorstehenden Ansprüche, ferner mit dem Schritt:
Entfernen eines Teils des auf die ausgewählten Oberflächenbereiche (38) aufgebrachten Materials.

6. Verfahren nach Anspruch 5, wobei die Entfernung des Teils des Materials die Ablösung vorbestimmter Teile des Materials mit einem Laser beinhaltet.

7. Verfahren nach einem der vorstehenden Ansprüche, wobei das Material auf ausgewählte Oberflächenbereiche (38) von einer von einer Verdichterlaufschaufel und einer Turbinenlaufschaufel (24) aufgebracht wird.

8. Turbomaschinenkomponente, aufweisend:
einen Körperabschnitt (32) mit einer Außenoberfläche (38); und
wenigstens eine auf der Außenoberfläche (38) ausgebildete strukturierte Zone (47), wobei die strukturierte Zone (47) auf ausgewählte Abschnitte der Außenoberfläche (38) durch einen Direktschreib-(DW)-Prozess aufgebrachtes Material enthält und mehrere erhöhte Elemente (54) aufweist, wobei jedes erhöhte Element (54) einen Körperabschnitt (57) mit einem Basisabschnitt (59) enthält, der sich zu einem Spitzenabschnitt (61) erstreckt, **dadurch gekennzeichnet, dass** der Körperabschnitt (57) mehrere auf seiner Oberfläche ausgebildete Poren (69) hat, wobei jedes erhöhte Element (54) eine im Wesentlichen trapezartige Form hat, bei dem der Basisabschnitt (59) größer als der Spitzenabschnitt (61) ist.

9. Turbomaschine nach Anspruch 8, ferner mit Schritt:
Entfernen eines Teils des auf die ausgewählten Oberflächenbereiche (38) aufgebrachten Materials.

10. Turbomaschine nach Anspruch 8 oder 9, wobei die Turbomaschinenkomponente (32) eine dreidimensionale (3D-) Oberfläche enthält.

11. Turbomaschine nach Anspruch 8, 9 oder 10, wobei die Turbomaschinenkomponente eine von einer Verdichterlaufschaufel und einer Turbinenlaufschaufel ist.

12. Turbomaschine nach einem der Ansprüche 8 bis 11, wobei die Turbomaschinenkomponente (32) eine zweidimensionale (2D-) Oberfläche enthält.

13. Turbomaschine nach einem der Ansprüche 8 bis 12, wobei die Turbomaschinenkomponente ein Deckband ist.

## Revendications

1. Procédé de formation de modelé sur une pièce (24) de turbomachine, le procédé comportant :
un apport de matière, par lithographie directe (DW), sur des régions choisies (38) de la surface de la pièce (24) de turbomachine, la matière étant agencée suivant un motif prédéterminé afin de former au moins une zone modelée (47) ayant une pluralité d'éléments en relief (54), chaque élément en relief (54) comprenant une partie formant corps (57) ayant une base (59) qui s'étend jusqu'à un sommet (61), **caractérisé en ce que** le corps (57) a une pluralité de pores (69) formés à la surface de celui-ci, chaque élément en relief (54) ayant une forme globalement trapézoïdale, la base (59) étant plus grande que le sommet (61).

2. Procédé selon la revendication 1, comportant en outre : la création d'un fichier informatique de dessin qui définit le modelé prédéterminé à ajouter sur les régions choisies (38) de la surface de la pièce (24) de turbomachine.

3. Procédé selon la revendication 2, comportant en outre : le transfert du modelé directement sur la pièce de turbomachine.

4. Procédé selon l'une quelconque des revendications précédentes, comportant en outre : un apport de matière à l'aide d'un ou de plusieurs processus parmi la distribution par buse, la pulvérisation thermique, la lithographie douce et le laser.

5. Procédé selon l'une quelconque des revendications précédentes, comportant en outre : l'élimination d'une partie de la matière apportée sur les régions choisies (38) de la surface.

6. Procédé selon la revendication 5, dans lequel l'élimination de la partie de la matière comprend la dissolution, par laser, de parties prédéterminées de la matière.

7. Procédé selon l'une quelconque des revendications précédentes, dans lequel la matière est apportée sur des régions choisies (38) de la surface d'une pale de compresseur ou d'une aube mobile (24) de turbine.

8. Pièce de turbomachine, comportant :
un corps (32) comprenant une surface extérieure (38) ; et
au moins une zone modelée (47) formée sur la surface extérieure (38), la zone modelée (47) comprenant de la matière apportée par lithographie directe (DW) sur des parties choisies de la surface extérieure (38), et comprenant une pluralité d'éléments en relief (54), chaque élément en relief (54) comprenant un corps (57) ayant une base (59) qui s'étend jusqu'à un sommet (61), **caractérisée en ce que** le corps (57) a une pluralité de pores (69) formés à la surface de celui-ci, chaque élément en relief (54) ayant une forme globalement trapézoïdale, la base (59) étant plus grande que le sommet (61).

9. Turbomachine selon la revendication 8, comportant en outre :
l'élimination d'une partie de la matière apportée sur les parties choisies de la surface extérieure.

10. Turbomachine selon la revendication 8 ou 9, dans laquelle la pièce (32) de turbomachine a une surface à trois dimensions (3D).

11. Turbomachine selon la revendication 8, 9 ou 10, dans laquelle la pièce de turbomachine est une pale de compresseur ou une aube mobile de turbine.

12. Turbomachine selon l'une quelconque des revendications 8 à 11, dans laquelle la pièce de turbomachine a une surface à deux dimensions (2D).

13. Turbomachine selon l'une quelconque des revendications 8 à 12, dans laquelle la pièce de turbomachine est une enveloppe.
